# FASCICULE DE BREVET EUROPEEN

(11) **EP 3 899 317 B1**
(45) Date de publication et mention de la délivrance du brevet: **04.01.2023**
(21) Numéro de dépôt: 19832653.0
(22) Date de dépôt: 19.12.2019
(51) Int. Cl.: F16F 15/123

(54) **DISPOSITIF DE TRANSMISSION DE COUPLE AVEC DES RESSORTS EN SERIE ET SYSTEME DE TRANSMISSION DE COUPLE COMPRENANT UN TEL DISPOSITIF**
DREHMOMENTÜBERTRAGUNGSVORRICHTUNG MIT FEDERN IN REIHE UND DREHMOMENTÜBERTRAGUNGSSYSTEM MIT EINER SOLCHEN VORRICHTUNG
TORQUE TRANSMISSION DEVICE WITH SPRINGS IN SERIES AND TORQUE TRANSMISSION SYSTEM COMPRISING SUCH A DEVICE

(30) Priorité: 20.12.2018 FR 1873595; 28.01.2019 FR 1900747
(43) Date de publication de la demande: 27.10.2021
(73) Titulaire: VALEO EMBRAYAGES, 80009 Amiens (FR)
(72) Inventeur: MARECHAL, Olivier, 95892 CERGY PONTOISE (FR); BAGARD, Didier, 95892 CERGY PONTOISE (FR); BOUCHENY, Pierre, 95892 CERGY PONTOISE (FR); DENIZOT, David, 95892 CERGY PONTOISE (FR)
(86) Numéro de dépôt international: PCT/EP2019/086172
(87) Numéro de publication internationale: WO 2020/127639

(56) Documents cités:
- EP-A1- 3 336 380
- EP-A2- 3 026 294
- DE-A1-102012 215 829
- DE-A1-102014 220 901
- DE-A1-102017 201 913
- US-A1- 2017 122 402
- US-A1- 2017 184 178

## Description

La présente invention concerne un dispositif de transmission de couple pour un véhicule automobile.

On connait les dispositifs de transmission de couple de type LTD (amortisseur longue course). Ces dispositifs comprennent plusieurs paires de ressorts, les organes élastiques d'une même paire étant agencés en série par l'intermédiaire d'un organe de phasage de façon à ce que les organes élastiques de chaque paire se déforment en phase les uns avec les autres.

De tels dispositifs de transmission de couple sans sièges d'appui sont connus. Le document DE102016203042 divulgue un dispositif de ce type. Ce dispositif présente l'inconvénient de subir beaucoup d'usure au niveau des appuis des extrémités des ressorts, en raison des frottements au niveau des interfaces d'entrée et de sortie de chaque paire de ressort.

Il est également connu dans EP 3 026 294 de disposer des sièges d'appui aux extrémités de chaque ressort. Ce dispositif présente l'inconvénient d'utiliser beaucoup d'espace circonférentiel pour les sièges au détriment des ressorts qui doivent donc être raccourcis. Ce dispositif de transmission de couple a donc une plus grande raideur, et un amortissement moins performant.

### Résumé

L'objectif de l'invention est donc de fournir un dispositif de transmission de couple avec un amortissement performant et en évitant les phénomènes d'usure au niveau des extrémités des ressorts.

A cet effet, l'invention vise un dispositif de transmission de couple comprenant :
- un premier élément qui peut tourner autour d'un axe de rotation (X);
- un deuxième élément qui peut tourner autour de l'axe de rotation (X);
- un troisième élément qui peut tourner autour de l'axe de rotation (X);
- un premier ressort qui est agencé entre le premier élément et le troisième élément de façon à être comprimé élastiquement lors d'une rotation relative entre le premier élément et le troisième élément,
- un deuxième ressort qui est agencé entre le deuxième élément et le troisième élément de façon à être comprimé élastiquement lors d'une rotation relative entre le deuxième élément et le troisième élément, le premier ressort et le deuxième ressort étant agencés en série entre le premier élément et le deuxième élément par l'intermédiaire de l'élément de transfert de couple du troisième élément,
- un premier siège d'appui disposé à une première extrémité du premier ressort, d'une part entre le premier élément et le premier ressort pour transférer le couple entre le premier élément et le premier ressort dans un premier sens de rotation relative des premier élément et deuxième élément, d'autre part entre le deuxième élément et le premier ressort pour transférer le couple entre le deuxième élément et le premier ressort dans un second sens de rotation relative des premier élément et deuxième élément,
- un deuxième siège d'appui disposé à une première extrémité du deuxième ressort, d'une part entre le deuxième élément et le deuxième ressort pour transférer le couple entre le deuxième élément et le deuxième ressort dans le premier sens de rotation relative des premier élément et deuxième élément, d'autre part entre le premier élément et le deuxième ressort pour transférer le couple entre le premier élément et le deuxième ressort dans le second sens de rotation relative des premier élément et deuxième élément,
le dispositif de transmission de couple étant caractérisé en ce que le troisième élément comprend un élément de transfert de couple transférant directement le couple entre le premier ressort et le deuxième ressort.

Autrement dit, le dispositif de transmission de couple est dépourvu de siège d'appui rapporté entre d'une part l'élément de transfert de couple du troisième élément et le premier ressort, et d'autre part entre l'élément de transfert de couple du troisième élément et le deuxième ressort.

L'élément de transfert de couple est directement en contact avec le premier ressort et avec le deuxième ressort.

Ainsi, cette solution permet à la fois d'obtenir un amortissement de qualité tout en limitant l'usure des ressorts. D'une part, on limite les frottement et l'hystérésis dynamique entre les ressorts et les premier et deuxièmes éléments. D'autre part, le débattement angulaire n'est pas limité par la présence d'un siège à chaque extrémité de ressort.

Le dispositif de transmission de couple peut comporter également les caractéristiques additionnelles suivantes, seules ou en combinaison :

Le premier ressort et le deuxième ressort sont des ressorts hélicoïdaux en acier.

Le premier ressort et deuxième ressort sont agencés sur un même rayon. Autrement dit ils sont disposés en série dans une direction circonférentielle.

L'élément de transfert de couple est métallique, par exemple en acier. Ainsi l'interface d'appui provoque moins d'usure que lorsque les ressorts en acier coopèrent avec des sièges plastique. De plus le fait de mettre en œuvre un élément de transfert de couple métallique, notamment en acier, la résistance du matériau permet de réduire la dimension circonférentielle de l'élément de transfert de couple et d'utiliser ce gain de place pour augmenter la taille des ressorts, et donc la qualité de l'amortisseur.

Le premier ressort et le deuxième ressort sont disposés dans un espace ouvert du dispositif de transmission de couple. Autrement dit, le premier ressort et le deuxième ressort sont disposés dans un espace non étanche, dépourvu de graisse.

Selon un mode de réalisation, le premier siège et le deuxième siège sont dépourvus de pivot. Il ne pivotent alors pas radialement.

Le dispositif de transmission de couple comprend une pluralité de premiers ressorts et une pluralité de deuxièmes ressorts organisés en paires de ressorts.

Le troisième élément est un organe de phasage comprenant une pluralité d'éléments de transfert de couple, chaque élément de transfert de couple étant intercalé entre le premier ressort et le deuxième ressort d'une paire de ressort, le premier ressort et le deuxième ressort de chaque paire de ressorts étant agencés en série par l'intermédiaire d'un élément de transfert de couple.

L'organe de phasage comporte au moins une rondelle de phasage dotée d'une portion annulaire s'étendant autour de l'axe de rotation X.

Le dispositif de transmission de couple comprend une pluralité de premiers sièges d'appui disposés chacun à une première extrémité d'un premier ressort.

Le dispositif de transmission de couple comprend une pluralité de deuxièmes sièges d'appui disposés chacun à une première extrémité d'un deuxième ressort.

Chaque rondelle de phasage est formée dans une tôle d'acier.

La portion annulaire de la rondelle de phasage se développe radialement.

Chaque portion annulaire s'étend autour de l'axe de rotation radialement à l'intérieur des premier et deuxième ressorts. Ainsi, l'encombrement radial est réduit.

L'un parmi le premier élément et le deuxième élément porte un disque de friction et l'autre parmi le premier élément et le deuxième élément comporte un moyeu apte à entrainer un arbre d'entrée de boite de vitesse.

Selon un mode de réalisation, le premier élément comporte un voile s'étendant autour de l'axe de rotation et le deuxième élément comporte deux rondelles latérales agencées de part et d'autre du voile.

L'élément de transfert de couple est situé axialement entre les rondelles latérales.

Le troisième élément comporte deux rondelles de phasage décalées axialement l'une de l'autre.

Le cas échéant, les deux rondelles de phasage sont agencées axialement à l'intérieur des deux rondelles latérales du deuxième élément.

Le cas échéant, les deux rondelles de phasage sont agencées axialement de part et d'autre du voile.

Les deux rondelles de phasage sont espacées axialement l'une de l'autre.

Le cas échéant, le disque de friction est monté solidaire en rotation sur le voile, par exemple au moyen de rivets.

L'élément de transfert de couple est en appui circonférentiellement contre une deuxième extrémité du premier ressort et également en appui circonférentiellement contre une deuxième extrémité du deuxième ressort.

L'élément de transfert de couple fait saillie radialement depuis la portion annulaire de la rondelle de phasage.

L'élément de transfert de couple comprend un premier centreur disposé dans la deuxième extrémité du premier ressort.

L'élément de transfert de couple comprend un deuxième centreur disposé dans la deuxième extrémité du deuxième ressort. Ainsi les centreurs permettent d'orienter le positionnement axial des ressorts, de préférence dans un plan perpendiculaire à l'axe de rotation X.

Un jeu axial est présent entre le premier centreur et le premier ressort et un jeu axial est présent entre le deuxième centreur et le deuxième ressort, chaque jeu axial étant inférieur à 1mm, en particulier inférieur à 0.5 mm. De préférence, chaque jeu axial est supérieur à 0,1 mm.

Les premier et deuxième sièges sont fabriqués avec du plastique, par exemple du polyamide ou du PAEK, par exemple du polyamide 6-6 ou du PEEK.

Les premier et deuxième sièges peuvent être chargés en fibres, par exemple en fibres de verre ou en fibres de carbone. Par exemple, les sièges peuvent comporter entre 20% et 50% en poids de fibres, par exemple 30% de fibres de verre.

Selon un autre mode de réalisation, les premier et deuxième sièges comportent un insert métallique autour duquel le plastique est surmoulé.

Selon un autre mode de réalisation, les premier et deuxième sièges sont en métal.

Le premier siège et le deuxième siège disposent d'une coiffe recouvrant radialement respectivement la première extrémité du premier ressort et la première extrémité du deuxième ressort. Ainsi, les sièges guident radialement les ressorts.

Le premier siège et le deuxième siège comportent des nervures de guidage axial aptes à coopérer avec le premier élément et le deuxième élément.

Les coiffes du premier siège et du deuxième siège comportent chacune des nervures de guidage axial aptes à coopérer avec le premier élément et le deuxième élément.

Le premier siège comporte une première surface d'appui contre laquelle s'appuie une première face d'extrémité du premier ressort.

Dans un plan perpendiculaire à l'axe de rotation X et à l'état de couple neutre, un premier jeu angulaire θ1 sépare la première face d'extrémité du premier ressort et la première surface d'appui du premier siège, ce jeu angulaire étant compris entre 1 et 15°, notamment entre 3 et 10°.

Le deuxième siège comporte une deuxième surface d'appui contre laquelle s'appuie une première face d'extrémité du deuxième ressort.

Dans un plan perpendiculaire à l'axe de rotation X et à l'état de couple neutre, un deuxième jeu angulaire θ2 sépare la première face d'extrémité du deuxième ressort et la deuxième surface d'appui du deuxième siège, ce jeu angulaire étant compris entre 1 et 15°, notamment entre 3 et 10°.

L'élément de transfert de couple comporte une troisième surface d'appui contre laquelle s'appuie une deuxième face d'extrémité du premier ressort.

Dans un plan perpendiculaire à l'axe de rotation X et à l'état de couple neutre, un troisième jeu angulaire θ3 sépare la deuxième face d'extrémité du premier ressort et la troisième surface d'appui de l'élément de transfert de couple, ce jeu angulaire étant compris entre 1 et 15°, notamment entre 3 et 10°.

L'élément de transfert de couple comporte une quatrième surface d'appui contre laquelle s'appuie une deuxième face d'extrémité du deuxième ressort.

Dans un plan perpendiculaire à l'axe de rotation X et à l'état de couple neutre, un quatrième jeu angulaire θ4 sépare la deuxième face d'extrémité du deuxième ressort et la quatrième surface d'appui de l'élément de transfert de couple, ce jeu angulaire étant compris entre 1 et 15°, notamment entre 3 et 10°.

Ainsi, lorsque les jeux angulaires θ1, θ2, θ3, et θ4 sont compris, à l'état de couple neutre, entre 3 et 10°, notamment entre 5° et 8°, le décalage angulaire d'attaque des ressorts est réparti au niveau de chacune des extrémités des premier et deuxième ressorts, ce qui permet de répartir sur chaque extrémité de ressort les frottements intervenant au niveau des extrémités de ressort lorsque le jeu angulaire d'attaque est rattrapé. L'invention n'est bien entendu pas limitée à ces valeurs de jeux angulaires, l'un de ces jeux pouvant également être nul dans un autre mode de réalisation.

Les première et deuxième surfaces d'appui sont des surfaces annulaires d'appui, la première face d'extrémité du premier ressort et la première face d'extrémité du deuxième ressort étant formées respectivement par une première spire d'extrémité du premier ressort et une première spire d'extrémité du deuxième ressort qui reposent chacune respectivement sur la première surface d'appui et la deuxième surface d'appui. Ainsi, la spire d'extrémité des ressorts repose entièrement contre le siège, ce qui limite l'usure des ressorts.

Les surfaces annulaires d'appui se développent dans un plan parallèle à l'axe de rotation X.

L'élément de transfert de couple comporte un premier plot supérieur et un deuxième plot supérieur faisant saille circonférentiellement dans deux directions circonférentiellement opposées, le premier plot supérieur recouvrant radialement la deuxième extrémité du premier ressort et le deuxième plot supérieur recouvrant la deuxième extrémité du deuxième ressort.

Le dispositif de transmission de couple comprend un troisième ressort qui est logé à l'intérieur du premier ressort.

Le dispositif de transmission de couple comprend un quatrième ressort qui est logé à l'intérieur du deuxième ressort.

Le dispositif de transmission de couple comprend un premier absorbeur de choc disposé à l'intérieur du premier ressort et apte à s'opposer élastiquement à la rotation relative entre le premier élément et le troisième élément au-delà d'un premier débattement angulaire prédéterminé entre le premier élément et le troisième élément dans un premier sens de rotation relative.

Le dispositif de transmission de couple comprend un deuxième absorbeur de choc disposé à l'intérieur du deuxième ressort et apte à s'opposer élastiquement à la rotation relative entre le deuxième élément et le troisième élément au-delà d'un deuxième débattement angulaire prédéterminé débentre le deuxième élément et le troisième élément dans le premier sens de rotation relative.

Chaque absorbeur de choc a une forme de colonne.

Chaque absorbeur de choc est en thermoplastique, par exemple en copolyester, par exemple formé dans un matériau tel quel l'hytrel^{®}.

Le cas échéant, le premier siège est agencé pour s'appuyer contre le troisième ressort. Le cas échéant, le deuxième siège est agencé pour s'appuyer contre le quatrième ressort.

Le cas échéant, le premier absorbeur est disposé dans le troisième ressort.

Le cas échéant, le deuxième absorbeur est disposé dans le quatrième ressort.

Le premier ressort et/ou le deuxième ressort sont montés avec une précharge telle que leur longueur est réduite de moins de 2 mm, de préférence moins de 1 mm, par rapport à leur longueur à l'état libre.

Les premiers et deuxièmes sièges comportent chacun un téton de centrage des premier et deuxième ressorts.

Chaque rondelle de phasage comporte une patte s'étendant radialement depuis la portion annulaire et agencée circonférentiellement entre le premier ressort et le deuxième ressort.

Chaque élément de transfert de couple est formé par un insert monté sur au moins l'une des pattes de rondelle de phasage.

Chaque insert est réalisé en acier, de préférence acier fritté ou moulé.

Chaque insert étant serré axialement entre une patte d'une rondelle de phasage et une patte d'une autre rondelle de phasage.

L'insert est assemblé avec les deux pattes de rondelle de phasage entre lesquelles il est intercalé au moyen d'un élément de fixation tel qu'un rivet.

Chaque insert est disposé entre deux rondelles de phasage assemblées entre elles.

Des moyens de fixation sont disposés dans les éléments de transfert de couple pour assembler les rondelles de phasage entre elles.

L'insert présente un corps plat disposé perpendiculairement à l'axe X. Le premier ressort et le deuxième ressort s'appuient contre deux tranches circonférentiellement opposée du corps de l'insert. Ces deux tranches forment la troisième surface d'appui et la quatrième surface d'appui. L'épaisseur (E) de ce corps est inférieure à la largeur axiale (L) des premier et deuxième ressorts.

De préférence, L'épaisseur axiale (E) du corps est telle que E< 0,6 L de préférence, E< 0,4 L, L étant la largeur axiale des ressorts. Ainsi, notamment en raison du matériau choisi pour l'insert, ce dernier est peu encombrant axialement.

L'insert comporte sur chacune de ses deux faces opposées un bossage. Les deux bossages de l'insert sont plaqués chacun contre une patte de rondelle de phasage. Chaque patte de rondelle de phasage est percée et l'insert est également percé au niveau des bossages pour accueillir un organe de fixation qui solidarise ensemble les deux rondelles de phasage et l'insert. Par exemple, cet organe de fixation est un rivet. Ainsi, l'organe de phasage est réalisé de façon très simple. L'organe de phasage est à la fois peu encombrant et simple à réaliser en raison de la géométrie simple des éléments qui le composent, à savoir deux rondelles de phasage en tôle, un insert, et des organes de fixation tels que des rivets.

L'insert est agencé sur le même plan que le premier élément. Le cas échant, l'insert est agencé sur le même plan perpendiculaire à l'axe de rotation que le voile.

Une portion de recouvrement du premier élément recouvre radialement l'insert, un jeu radial séparant la portion de recouvrement du premier élément et au moins une portion de l'insert, par exemple le ou les plot(s). Ainsi, il y a peu de perte d'espace radial.

Chaque rondelle de phasage comporte une patte s'étendant radialement depuis la portion annulaire et agencée circonférentiellement entre le premier ressort et le deuxième ressort.

La rondelle de phasage comporte une patte s'étendant radialement depuis la portion annulaire et agencée circonférentiellement entre le premier ressort et le deuxième ressort, l'élément de transfert de couple étant formé par ladite patte.

La patte est ainsi une patte de transfert de couple.

Le troisième élément comprend pour chaque paire de ressorts deux éléments de transfert de couple transférant directement le couple entre le premier ressort et le deuxième ressort d'une même paire de ressorts.

Le troisième élément comprend deux rondelles de phasage et les deux éléments de transfert de couple d'une paire de ressorts sont formés respectivement sur deux pattes formées respectivement sur chacune des deux rondelles de phasage ; les deux pattes étant agencées axialement en vis-à-vis l'une de l'autre.

L'appui des premiers et deuxièmes ressorts se fait sur les tranches circonférentiellement opposées des pattes des rondelles de phasage.

Circonférentiellement entre le premier ressort et le deuxième ressort d'une paire de ressorts, au moins une entretoise relie les deux pattes qui forment les deux éléments de transfert de couple.

Selon un mode de réalisation non représenté, entre le premier ressort et le deuxième ressort d'une paire de ressorts, deux entretoises relient les deux pattes qui forment les deux éléments de transfert de couple. Par exemple, les entretoises sont des entretoises plates. Par exemple, l'une des deux entretoises est orientée parallèlement à la deuxième face d'extrémité du premier ressort et l'autre des deux entretoises est orientée parallèlement à la deuxième face d'extrémité du deuxième ressort.

Les entretoises sont serties dans les pattes 37 de rondelles de phasage 31, 32.

Les pattes des rondelles de phasage sont embouties. Chaque patte comprend un relief orienté tourné dans direction opposée à l'autre rondelle de phasage, l'entretoise étant monté sur ce relief.

Le premier siège prend appui contre les premier et deuxième éléments via une première surface d'appui dorsale. Le deuxième siège prend appui contre les premier et deuxième éléments via une deuxième surface d'appui dorsale.

Chaque patte s'inscrit sensiblement dans un plan perpendiculaire à l'axe de rotation X.

L'invention a également pour objet un système de transmission de couple comprenant un dispositif de transmission de couple et un limiteur de couple configuré pour pincer le disque de friction du dispositif de transmission de couple.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
Les [Fig. 1], [Fig. 2], [Fig. 3] sont des représentations schématiques d'une transmission de couple entre un premier élément, un deuxième élément, et un troisième élément avec un premier ressort et un deuxième ressort intercalés, à différents stades de transmission.
La [Fig. 4] est une vue éclatée d'un premier mode de réalisation.
La [Fig. 5] est une vue en coupe dans un plan comprenant l'axe de rotation du premier mode de réalisation.
La [Fig. 6] est une vue en coupe dans un plan perpendiculaire à l'axe de rotation du premier mode de réalisation.
La [Fig. 7] est une vue de détail du premier mode de réalisation.
La [Fig. 8] est une vue éclatée d'un deuxième mode de réalisation.
La [Fig. 9] est une vue en coupe dans un plan perpendiculaire à l'axe de rotation d'un troisième mode de réalisation.
La [Fig. 10] représente de façon schématique une vue de détail du troisième mode de réalisation.

### Description des modes de réalisation

Dans la description et les revendications, on utilisera les termes "externe" et "interne" ainsi que les orientations "axiale" et "radiale" pour désigner, selon les définitions données dans la description, des éléments du dispositif de transmission de couple. Par convention, l'orientation "radiale" est dirigée orthogonalement à l'axe X de rotation des éléments du dispositive de transmission de couple déterminant l'orientation "axiale" et, de l'intérieur vers l'extérieur en s'éloignant dudit axe, l'orientation "circonférentielle" est dirigée orthogonalement à la direction axiale et à la direction radiale. Les termes "externe" et "interne" sont utilisés pour définir la position relative d'un élément par rapport à un autre, par référence à l'axe X de rotation, un élément proche de l'axe est ainsi qualifié d'interne par opposition à un élément externe situé radialement en périphérie.

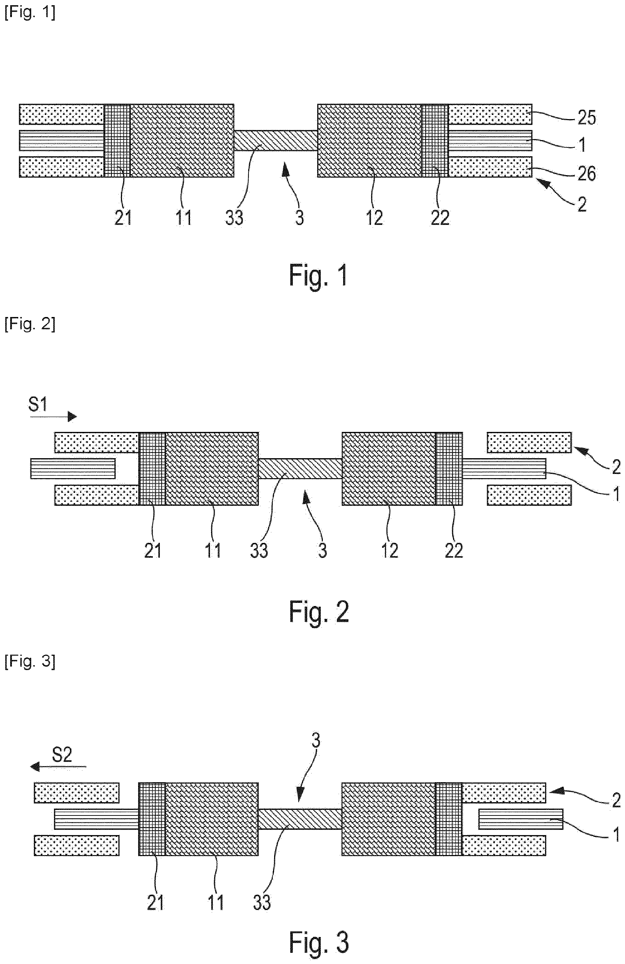

Les figures 1 à 3 montrent des schémas de principe illustrant le fonctionnement d'un dispositif de transmission de couple comprenant un premier ressort 11 et un deuxième ressorts 12 agencés en série entre un premier élément 1 et un deuxième élément 2, par l'intermédiaire d'un troisième élément 3.

Le dispositif de transmission de couple comprend
- un premier élément 1 qui peut tourner autour d'un axe de rotation X;
- un deuxième élément 2 qui peut tourner autour de l'axe de rotation X;
- un troisième élément 3 qui peut tourner autour de l'axe de rotation X;
- un premier ressort 11 qui est agencé entre le premier élément 1 et le troisième élément 3 de façon à être comprimé élastiquement lors d'une rotation relative entre le premier élément 1 et le troisième élément 3,
- un deuxième ressort 12 qui est agencé entre le deuxième élément 2 et le troisième élément 3 de façon à être comprimé élastiquement lors d'une rotation relative entre le deuxième élément 2 et le troisième élément 3, le premier ressort 11 et le deuxième ressort 12 étant agencés en série entre le premier élément 1 et le deuxième élément 2 par l'intermédiaire de l'élément de transfert de couple 33 du troisième élément 3,
- un premier siège d'appui 21 disposé à une première extrémité du premier ressort 11, d'une part entre le premier élément 1 et le premier ressort 11 pour transférer le couple entre le premier élément 1 et le premier ressort 11 dans un premier sens S1 de rotation relative des premier élément 1 et deuxième élément 2, d'autre part entre le deuxième élément 2 et le premier ressort 11 pour transférer le couple entre le deuxième élément 2 et le premier ressort 11 dans un second sens S2 de rotation relative des premier élément 1 et deuxième élément 2,
- un deuxième siège d'appui 22 disposé à une première extrémité du deuxième ressort 12, d'une part entre le deuxième élément 2 et le deuxième ressort 12 pour transférer le couple entre le deuxième élément 2 et le deuxième ressort 12 dans le premier sens S1 de rotation relative des premier élément 1 et deuxième élément 2 , d'autre part entre le premier élément 1 et le deuxième ressort 12 pour transférer le couple entre le premier élément 1 et le deuxième ressort 12 dans le second sens S2 de rotation relative des premier élément 1 et deuxième élément 2 .

En figure 1, le dispositif de transmission de couple est au repos, c'est-à-dire à vitesse nulle et à couple nul ou couple neutre.

En figure 2, le dispositif de transmission de couple transfère un couple du deuxième élément 2 vers le premier élément 1 dans un sens relatif S1. Le premier ressort 11 et le deuxième ressort 12 sont comprimés entre le premier élément 1 et le deuxième élément 2. Un espace sépare le premier ressort 11 du premier élément 1 et un autre espace sépare le deuxième ressort 12 du deuxième élément 2.

En figure 3, le dispositif de transmission de couple transfère un couple du premier élément vers le deuxième élément dans un sens relatif S2, opposé à S1. Le premier ressort 11 et le deuxième ressort 12 sont comprimés entre le premier élément 1 et le deuxième élément 2. Un espace sépare le premier ressort 11 du deuxième élément 2 et un autre espace sépare le deuxième ressort 12 du premier élément. 1.

Sur ces figures, on voit de façon schématique que le troisième élément comprend un élément de transfert de couple 33 transférant directement le couple entre le premier ressort 11 et le deuxième ressort 12. Autrement dit, le dispositif de transmission de couple est dépourvu de siège d'appui rapporté entre d'une part l'élément de transfert de couple du troisième élément et le premier ressort, et d'autre part entre l'élément de transfert de couple du troisième élément et le deuxième ressort.

Le premier ressort et le deuxième ressort sont des ressorts hélicoïdaux en acier et l'élément de transfert de couple est métallique, par exemple en acier.

Comme, l'élément de transfert de couple 33 est directement en contact avec le premier ressort 11 et avec le deuxième ressort 12 cette solution permet à la fois d'obtenir un amortissement de qualité tout en limitant l'usure des ressorts grâce l'interface de contact métal/métal au niveau de l'élément de transfert de couple. En effet, cette interface d'appui provoque moins d'usure que lorsque les ressorts en acier coopèrent avec des sièges plastique Ainsi, on limite les frottement et l'hystérésis dynamique entre les ressorts et les premier et deuxièmes éléments grâce à la présence des sièges et d'autre part, le débattement angulaire n'est pas limité par la présence d'un siège à chaque extrémité de ressort.

De plus, le fait de mettre en œuvre un élément de transfert de couple métallique, notamment en acier, la résistance du matériau permet de réduire la dimension circonférentielle de l'élément de transfert de couple et d'utiliser ce gain de place pour augmenter la taille des ressorts, et donc la qualité de l'amortisseur.

Les figures 1 à 3 présentent de façon schématique une seule paire de ressorts mais le dispositif de transmission de couple comprendra généralement une pluralité de premiers ressorts 11 et une pluralité de deuxièmes ressorts 12 organisés en paires de ressorts.

Dans ce cas de figure, le troisième élément 3 peut être un organe de phasage comprenant une pluralité d'éléments de transfert de couple 33, chaque élément de transfert de couple étant intercalé entre le premier ressort et le deuxième ressort d'une paire de ressort, et le premier ressort 11 et le deuxième ressort 12 de chaque paire de ressorts étant agencés en série par l'intermédiaire d'un élément de transfert de couple 33.

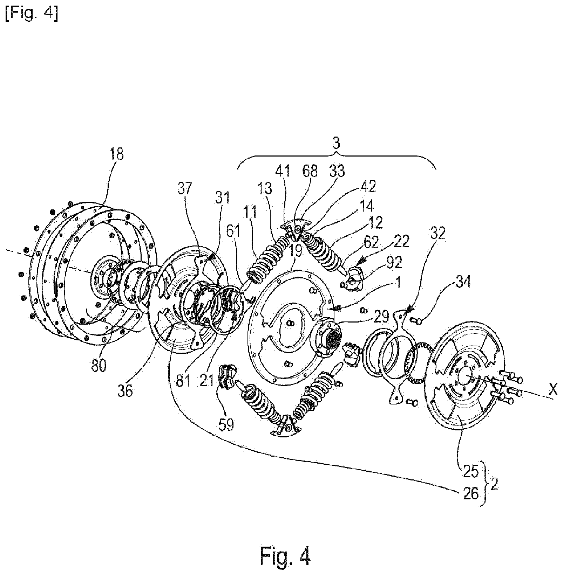

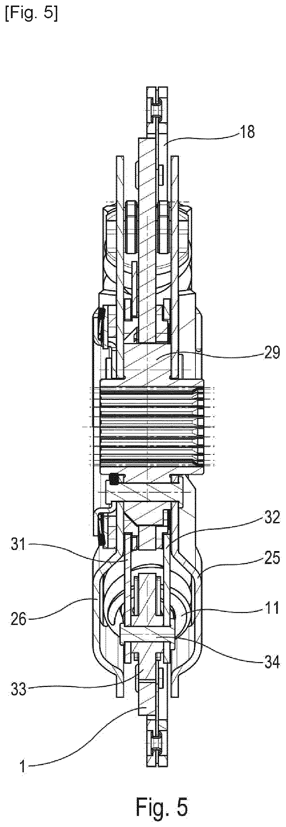

Un premier mode de réalisation est illustré sur les figures 4 à 7.

Le premier élément 1 porte un disque de friction 18 et le deuxième élément comporte un moyeu 29 apte à entrainer un arbre d'entrée de boite de vitesse. Dans ce mode de réalisation, le premier élément comporte un voile 1 s'étendant autour de l'axe de rotation X et le deuxième élément 2 comporte deux rondelles latérales 25 et 26 agencées de part et d'autre du voile 1. Le moyeu 29 est solidarisé avec les rondelles latérales 25, 26 grâce à une pluralité de rivets, par exemple six rivets. Le disque de friction 18 est monté solidaire en rotation sur le voile 1, par exemple au moyen de rivets. Le disque de friction porte des garnitures non référencées. Deux paires de premier 11 et deuxième 12 ressorts transmettent le couple entre le voile 1 et les rondelles latérales 25 et 26.

Le disque de friction est destiné à être pincé par un dispositif d'embrayage tel qu'un mécanisme d'embrayage ou un limiteur de couple.

Pour limiter le débattement angulaire entre le premier élément 1 et le deuxième élément, une butée angulaire 90 est agencée entre le moyeu 29 et le voile 1grâce à des dents, ménagées sur le moyeu 29, coulissant chacune circonférentiellement entre deux parois d'extrémité d'une encoche formée sur le contour intérieur du voile 1.

Le dispositif de transmission de couple comporte un dispositif de frottement 80 composé d'une pluralité de rondelles. Au moins une rondelle de frottement et au moins une rondelle élastique appliquant un effort axial en direction de la rondelle de frottement permettent de générer un frottement entre le premier élément 1 et le deuxième élément 2 lors d'une rotation relative entre le premier élément et le deuxième élément. Ici il s'agit, d'un dispositif de frottement à activation conditionnelle comprenant une rondelle d'activation 81 dotée d'une patte d'activation 82 disposée entre le deuxième ressort 12 et le premier élément 1. Ce dispositif de frottement à activation conditionnelle permet de générer un frottement uniquement dans un sens de transmission, par exemple en sens retro.

Selon un autre mode de réalisation non représenté, le deuxième élément pourrait comporter un voile 1 pouvant entrainer un moyeu de transmission destiné à être couplé à un arbre de boite de vitesse et le premier élément 1 pourrait comporter deux rondelles latérales 25 et 26 agencées de part et d'autre du voile 1, l'une de ces rondelles latérales pourrait porter le disque de friction.

Comme on le voit sur la figure 4, l'organe de phasage 3 comporte deux rondelles de phasage 31 et 32 décalées axialement et espacées l'une de l'autre. Les deux rondelles de phasage 31 et 32 sont agencées axialement à l'intérieur des deux rondelles latérales 25 et 26 du deuxième élément 2. Les deux rondelles de phasage 31 et 32 sont également agencées axialement de part et d'autre du voile.

Chaque rondelle de phasage 31, 32 est dotée d'une portion annulaire 36 s'étendant autour de l'axe de rotation X. La portion annulaire 36 de la rondelle de phasage se développe radialement. Chaque rondelle de phasage peut être formée dans une tôle d'acier.

Chaque portion annulaire 36 s'étend autour de l'axe de rotation radialement à l'intérieur des premier 11 et deuxième 12 ressorts. Ainsi, l'encombrement radial est réduit.

Le dispositif de transmission de couple comprend une pluralité de premiers sièges d'appui 21 disposés chacun à une première extrémité d'un premier ressort 11 et une pluralité de deuxièmes sièges d'appui 21 disposés chacun à une première extrémité d'un deuxième ressort 12.

L'élément de transfert de couple 33 est en appui circonférentiellement contre une deuxième extrémité du premier ressort 11 et également en appui circonférentiellement contre une deuxième extrémité du deuxième ressort 12. Il se développe radialement depuis les portions annulaires 36 des rondelles de phasage 31, 32.

Chaque rondelle de phasage 31, 32 comporte une patte 37 s'étendant radialement depuis la portion annulaire 36 et agencée circonférentiellement entre le premier ressort 11 et le deuxième ressort 12. Chaque élément de transfert de couple 33 est formé dans le premier mode de réalisation par un insert 33 monté entre deux pattes 37 appartenant chacune à une rondelle de phasage distincte. Chaque insert 33 est maintenu axialement entre ces deux pattes 37 et assemblé avec les deux pattes 37 au moyen d'un rivet 34. Les rondelles de phasage sont donc assemblées entre elles grâce aux rivets 34.

Chaque insert 33 présente un corps plat disposé perpendiculairement à l'axe X. De préférence, l'épaisseur axiale E du corps est telle que E< 0,6 L de préférence, E< 0,4 L, L étant la largeur axiale des ressorts. Ainsi, notamment en raison du matériau choisi pour l'insert, ce dernier est peu encombrant axialement.

Chaque insert 33 comporte sur chacune de ses deux faces opposées un bossage 68 faisant saillie axialement du corps. Les deux bossages 68 de l'insert sont plaqués chacun contre une patte 37 de rondelle de phasage 31, 32. Chaque patte 37 de rondelle de phasage 31, 32 est percée et l'insert 33 est également percé au niveau des bossages 68 pour accueillir un rivet de fixation 34 qui solidarise ensemble les deux rondelles de phasage 31 et 32 et l'insert 33. Ainsi, l'organe de phasage est réalisé de façon très simple.

Chaque insert est réalisé en acier, de préférence acier fritté ou moulé.

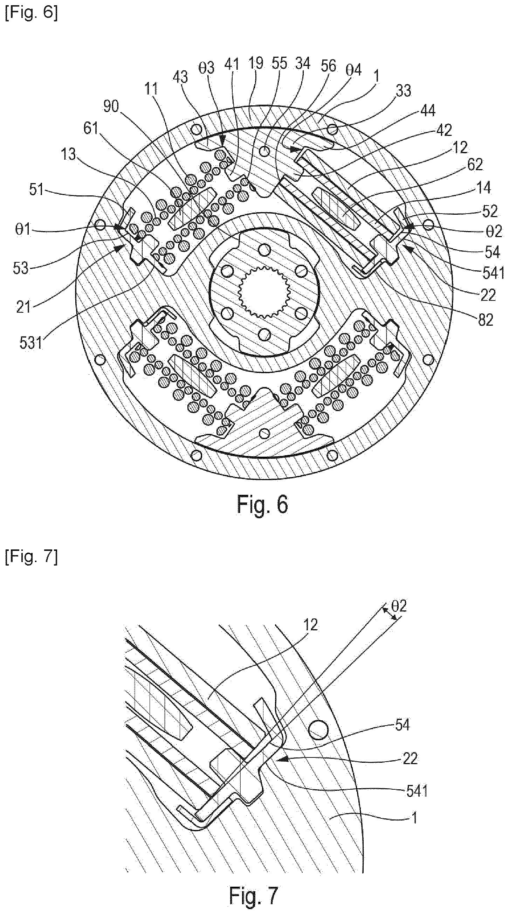

Comme on le voit sur la vue en coupe de la figure 6, l'insert 33 est agencé sur le même plan perpendiculaire à l'axe de rotation X que le voile.

Une portion de recouvrement 19 du voile1 recouvre radialement l'insert 33 et l'insert 33 a une tranche radialement supérieure présentant, dans un plan perpendiculaire à l'axe de rotation X, une forme d'arc de cercle centré sur l'axe de rotation X. La portion de recouvrement 19 du voile 1 présente une forme circulaire complémentaire à celle de la tranche supérieure de l'insert 33, un jeu séparant la portion de recouvrement 19 du voile 1 et la tranche supérieure de l'insert 33.

L'insert 33 comprend un premier centreur 41 disposé dans la deuxième extrémité du premier ressort 11, et un deuxième centreur 42 disposé dans la deuxième extrémité du deuxième ressort 12. Un jeu axial est présent entre le premier centreur 41 et le premier ressort 11 et entre le deuxième centreur 42 et le deuxième ressort 12, chaque jeu axial étant inférieur à 1mm, en particulier inférieur à 0.5 mm. De préférence, chaque jeu axial est supérieur à 0,1 mm.

Chaque insert 33 comporte aussi deux plots retenant radialement les deuxièmes extrémités du premier ressort 11 et du deuxième ressort 12.

Les plots et les centreurs sont formés dans le corps de l'insert, autrement dit ils ne s'étendent pas axialement au-delà du corps.

Les premier et deuxième sièges 21, 22 sont fabriqués avec du plastique, par exemple du polyamide ou du PAEK, par exemple du polyamide 6-6 ou du PEEK. Les premier et deuxième sièges 21, 22 peuvent être chargés en fibres, par exemple en fibres de verre ou en fibres de carbone. Par exemple, les sièges peuvent comporter entre 20% et 50% en poids de fibres, par exemple 30% de fibres de verre.

Le premier siège 21 et le deuxième siège 22 disposent d'une coiffe 51 recouvrant radialement respectivement la première extrémité du premier ressort 11 et la première extrémité du deuxième ressort 12, les coiffes du premier siège 21 et du deuxième siège 22 comportant chacune des nervures de guidage axial aptes à coopérer avec le voile 1 et les rondelles latérales 25 et 26.

En se reportant à la figure 4, on voit que le premier siège 21 comporte une première surface d'appui 53 contre laquelle s'appuie une première face d'extrémité du premier ressort 11. Dans un plan perpendiculaire à l'axe de rotation X et à l'état de couple neutre, un premier jeu angulaire θ1 sépare la première face d'extrémité du premier ressort et la première surface d'appui 53 du premier siège 21, ce jeu angulaire étant compris entre 1 et 15°, notamment entre 3 et 10°.

Le deuxième siège 22 comporte une deuxième surface d'appui 54 contre laquelle s'appuie une première face d'extrémité du deuxième ressort 12. Dans un plan perpendiculaire à l'axe de rotation X et à l'état de couple neutre, un deuxième jeu angulaire θ2 sépare la première face d'extrémité du deuxième ressort et la deuxième surface d'appui 54 du deuxième siège 22, ce jeu angulaire étant compris entre 1 et 15°, notamment entre 3 et 10° (voir figure 7).

L'insert 33 comporte une troisième surface d'appui 55 contre laquelle s'appuie une deuxième face d'extrémité du premier ressort 11. Dans un plan perpendiculaire à l'axe de rotation X et à l'état de couple neutre, un troisième jeu angulaire θ3 sépare la deuxième face d'extrémité du premier ressort et la troisième surface d'appui 55 de l'insert, ce jeu angulaire étant compris entre 1 et 15°, notamment entre 3 et 10°.

L'insert comporte une quatrième surface d'appui 56 contre laquelle s'appuie une deuxième face d'extrémité du deuxième ressort 12. Dans un plan perpendiculaire à l'axe de rotation X et à l'état de couple neutre, un quatrième jeu angulaire θ4 sépare la deuxième face d'extrémité du deuxième ressort et la quatrième surface d'appui 56 de l'insert, ce jeu angulaire étant compris entre 1 et 15°, notamment entre 3 et 10°.

Les deux tranches circonférentiellement opposées de l'insert 33 forment la troisième surface d'appui et la quatrième surface d'appui. L'épaisseur E de ce corps est inférieure à la largeur axiale L occupée par les premier et deuxième ressorts.

On voit sur la figure 6 une vue des deux paires de ressort dans un plan perpendiculaire à l'axe (X) passant par le voile 1et l'organe de phasage. L'un des deuxièmes ressorts 12 est illustré sous la forme d'un tube de façon à mieux montrer le jeu angulaire d'attaque au niveau de ce ressort.

On voit que l'attaque angulaire des premiers et deuxièmes ressorts 11 et 12 est répartie au niveau des quatre extrémités de chaque paire de ressort. Ainsi, lorsque les jeux angulaires θ1, θ2, θ3, et θ4 sont compris, à l'état de couple neutre, entre 3 et 10°, notamment entre 5° et 8°, le décalage angulaire d'attaque des ressorts est réparti au niveau de chacune des extrémités des premier et deuxième ressort.

Les première et deuxième surfaces d'appui 53 et 54 sont des surfaces annulaires d'appui, la première face d'extrémité du premier ressort et la première face d'extrémité du deuxième ressort étant formées respectivement par une première spire d'extrémité du premier ressort 11 et une première spire d'extrémité du deuxième ressort 12 qui reposent chacune respectivement sur la première surface d'appui 53 et la deuxième surface d'appui 54. Ainsi, la spire d'extrémité des ressorts repose entièrement contre le siège associé, ce qui limite l'usure des ressorts. Ces surfaces annulaires d'appui se développent dans un plan parallèle à l'axe de rotation X.

L'insert comporte un premier plot supérieur 43 et un deuxième plot supérieur 44 faisant saille circonférentiellement dans deux directions circonférentiellement opposées, le premier plot supérieur 43 recouvrant radialement la deuxième extrémité du premier ressort 11 et le deuxième plot supérieur 44 recouvrant la deuxième extrémité du deuxième ressort 12.

Le dispositif de transmission de couple comprend un troisième ressort 13 qui est logé à l'intérieur du premier ressort 11.

Le dispositif de transmission de couple comprend aussi un premier absorbeur de choc 61 disposé à l'intérieur du troisième ressort 13 et apte à s'opposer élastiquement à la rotation relative entre le voile 1 et l'organe de phasage 3 au-delà d'un premier débattement angulaire entre le voile 1 et l'organe de phasage 3 dans un premier sens de rotation relative.

Le dispositif de transmission de couple comprend en outre un quatrième ressort 14 qui est logé à l'intérieur du deuxième ressort 12.

Le dispositif de transmission de couple comprend aussi un deuxième absorbeur de choc 62 disposé à l'intérieur du quatrième ressort 14 et apte à s'opposer élastiquement à la rotation relative entre les rondelles latérales 25 et 26 et l'organe de phasage3 au-delà d'un deuxième débattement angulaire entre les rondelles latérales 25 et 26 et l'organe de phasage 3 dans le premier sens de rotation relative.

Chaque absorbeur de choc 61, 62 a une forme de colonne et est formé avec un matériau thermoplastique, par exemple en copolyester, par exemple avec un matériau tel quel l'hytrel^{®}.

Comme on peut le voir sur la figure 6, le premier siège 21 est agencé pour s'appuyer contre le troisième ressort 13 et le deuxième siège 22 est agencé pour s'appuyer contre le quatrième ressort 14.

Ici, le premier ressort et/ou le deuxième ressort sont montés avec une précharge telle que leur longueur est réduite de moins de moins de 1 mm, par rapport à leur longueur à l'état libre.

Les premiers et deuxièmes sièges comportent aussi chacun un téton (92) de centrage des premier (11) et deuxième (12) ressorts.

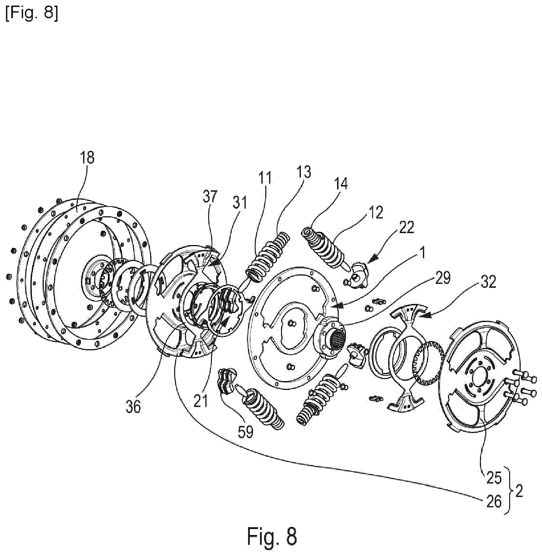

La figure 8 présente une vue éclatée d'un deuxième mode de réalisation dans lequel l'organe de phasage est dépourvu d'insert, chaque élément de transfert de couplé 33 étant formé directement par deux pattes 37 formée chacune sur une rondelle de phasage 31, 32 distincte, les deux pattes 37 étant agencées axialement en vis-à-vis.

L'organe de phasage 3 comprend donc pour chaque paire de ressorts deux éléments de transfert de couple 33 transférant directement le couple entre le premier ressort 11 et le deuxième ressort 12 d'une même paire de ressorts.

L'appui des premiers et deuxièmes ressorts 11 et 12 se fait sur les tranches circonférentiellement opposées des pattes 37 des rondelles de phasage 31 et 32.

Une entretoise plate relie les deux pattes 37. Chacune de des extrémités est sertie dans une patte 37.

Les pattes 37 des rondelles de phasage 31 et 32 sont embouties. Chaque patte 37 comprend un relief tourné dans une direction opposée à l'autre rondelle de phasage. L'entretoise 39 est montée sur ce relief.

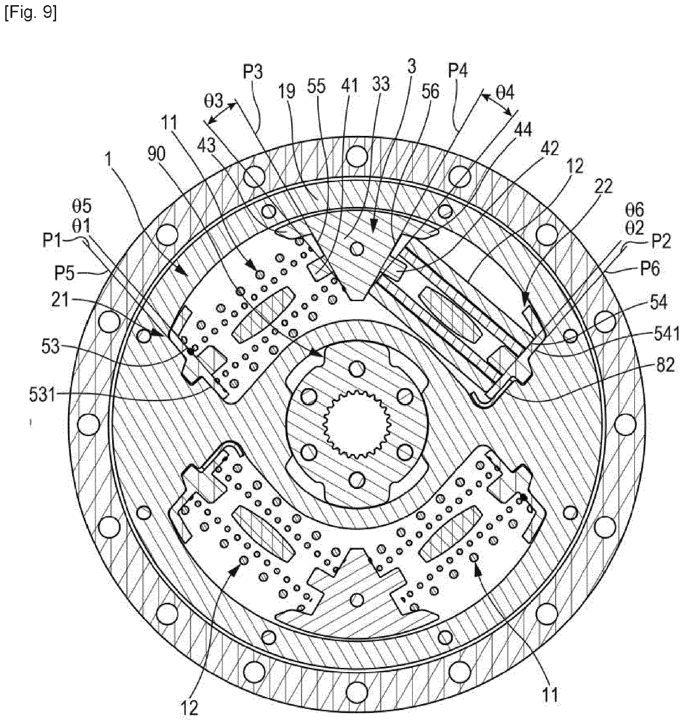

Sur la figure 9 est représentée un autre mode de réalisation dans lequel les différents composants cités précédemment sont identiques.

On voit sur la figure 9 que le dispositif de transmission de couple comprend deux premiers sièges d'appui 21 disposés chacun à une première extrémité d'un premier ressort 11, et deux deuxièmes sièges d'appui 21 disposés chacun à une première extrémité d'un deuxième ressort 12.

Le dispositif de transmission de couple comprend :
- un premier élément 1 qui peut tourner autour d'un axe de rotation X;
- un deuxième élément 2 qui peut tourner autour de l'axe de rotation X;
- un troisième élément 3 qui peut tourner autour de l'axe de rotation X;
- un premier ressort 11 qui est comprimé entre le deuxième élément 2 et le troisième élément 3 dans un premier sens de rotation relative S1 des premier élément 1 et deuxième élément 2 et qui est comprimé entre le premier élément 1 et le troisième élément 3 dans un deuxième sens de rotation relative S2 des premier élément 1 et deuxième élément 2 opposé au premier sens de rotation relative,
- le premier ressort 11 ayant, en position de repos de l'amortisseur, une première face d'extrémité 111 d'une part en appui direct ou indirect contre une première surface de contact 531 associée au premier élément 1 et d'autre part en appui direct ou indirect contre une cinquième surface de contact 532 associée au deuxième élément 2, le premier ressort 11 ayant également une deuxième face d'extrémité 112 en appui direct ou indirect contre une troisième surface de contact 55 associée au troisième élément 3,
- un deuxième ressort 12 qui est comprimé entre le troisième élément 3 et le premier élément 1 dans le premier sens de rotation relative des premier élément 1 et deuxième élément 2 et qui est comprimé entre le troisième élément 3 et le deuxième élément 2 dans le deuxième sens de rotation relative des premier élément 1 et deuxième élément 2,
- le deuxième ressort 12 ayant une première face d'extrémité 121 d'une part en appui direct ou indirect avec une deuxième surface de contact 541 associée au premier élément 1 et d'autre part en appui direct ou indirect contre une sixième surface de contact 542 associée au deuxième élément 2, le deuxième ressort 12 ayant également une deuxième face d'extrémité 122 en appui direct ou indirect avec une quatrième surface de contact 56 associée au troisième élément 3 ; le premier ressort 11 et le deuxième ressort 12 étant agencés en série entre le premier élément 1 et le deuxième élément 2 par l'intermédiaire du troisième élément 3.

L'élément de transfert de couple 33 est en appui circonférentiellement contre une deuxième extrémité du premier ressort 11 et également en appui circonférentiellement contre une deuxième extrémité du deuxième ressort 12. Il se développe radialement depuis les portions annulaires 36 des rondelles de phasage 31, 32. Ici, l'élément de transfert de couple transfère directement le couple entre le premier ressort 11 et le deuxième ressort 12. Autrement dit, le dispositif de transmission de couple est dépourvu de siège d'appui rapporté entre d'une part l'élément de transfert de couple 33 du troisième élément 3 et le premier ressort, et d'autre part entre l'élément de transfert de couple du troisième élément et le deuxième ressort.

La figure 9 illustre le dispositif de transmission de couple dans une position de repos. La première surface de contact 531, la deuxième surface de contact 541, la troisième surface de contact 55, la quatrième surface de contact 56, la cinquième surface de contact (non visible), et la sixième surface de contact (non visible) présentent respectivement un premier plan d'appui P1, un deuxième plan d'appui P2, un troisième plan d'appui P3, un quatrième plan d'appui P4, un cinquième plan d'appui P5, et un sixième plan d'appui P6 contre lesquels les ressorts 11, 12 peuvent venir se plaquer en cours de rotation relative ou en position relative de fin de débattement angulaire des premier et deuxième éléments 1, 2.

Comme on peut le voir sur la figure 9, dans un plan perpendiculaire à l'axe de rotation X passant dans le voile 1, en position relative de repos des premier et deuxième éléments, un deuxième jeu angulaire θ2 sépare la première face d'extrémité 121 du deuxième ressort 12 et le deuxième plan d'appui P2, un troisième jeu angulaire θ3 sépare la deuxième face d'extrémité 112 du premier ressort 11 et le troisième plan d'appui P3, un quatrième jeu angulaire θ4 sépare la deuxième face d'extrémité 122 du deuxième ressort 12 et le quatrième plan d'appui P4, un cinquième jeu angulaire θ5 sépare la première face d'extrémité 111 du premier ressort 11 et le premier plan d'appui P1.

On a aussi, même si on ne les voit pas sur la vue en coupe de la figure 9, les cinquième et sixième surface de contact 532 et 542 du deuxième élément 2, avec un premier jeu angulaire θ1 séparant la première face d'extrémité 111 du premier ressort 11 et le cinquième plan d'appui P5 de la cinquième surface de contact 532 et un sixième jeu angulaire θ6 séparant la première face d'extrémité 121 du deuxième ressort 12 et le sixième plan d'appui P6 de la sixième surface de contact 542.

Pour un bon fonctionnement du dispositif de transmission de couple dans le premier sens de rotation relative S1 des premier et deuxième éléments, le premier jeu angulaire θ1, le deuxième jeu angulaire θ2, le troisième jeu angulaire θ3 et le quatrième jeu angulaire θ4 sont tels que θ3 > 2×θ1 et θ4 > 2×θ2. Ici, le troisième jeu angulaire θ3 et le quatrième jeu angulaire θ4 sont d'environ 8 degrés et le premier jeu angulaire θ1 et le deuxième jeu angulaire θ2 sont nuls. Le jeu angulaire d'attaque est donc concentré exclusivement au niveau de l'organe de phasage, ce qui assure un très bon fonctionnement avec peu d'usure de l'amortisseur.

Autrement dit, lorsque le premier élément 1, le deuxième élément 2 et le troisième élément 3 sont dans la position relative de repos la première face d'extrémité 111 du premier ressort 11 est plaquée contre la premier plan d'appui P1 et la première face d'extrémité du deuxième ressort 12 est plaquée contre le deuxième plan d'appui P2.

Ainsi l'attaque des ressorts est concentrée de part et d'autre de l'organe de phasage, ce qui permet de limiter les phénomènes d'usure.

De même, un cinquième jeu angulaire θ5 sépare la première face d'extrémité 111 du premier ressort 11 et le premier plan d'appui P1 et un sixième jeu angulaire θ6 sépare la première face d'extrémité 121 du deuxième ressort 12 et le sixième plan d'appui P6.

Pour un bon fonctionnement du dispositif de transmission de couple dans le second sens de rotation relative S2 opposé à S1, on a aussi en position relative de repos : θ3 > 2×θ5 et θ4 > 2×θ6. Ici, le cinquième jeu angulaire θ5 et le sixième jeu angulaire θ6 sont nuls.

Autrement dit, lorsque les faces d'extrémité des ressorts sont en appui contre le premier plan d'appui P1, le deuxième plan d'appui P2, le troisième plan d'appui P3, le quatrième plan d'appui P4, le cinquième plan d'appui P5, et le sixième plan d'appui P6, cela signifie que le jeu angulaire d'attaque séparant les faces d'extrémité de leur plan d'appui correspondant a été repris.

Selon ce mode de réalisation, θ1 est donc sensiblement égal à θ5. De même, θ2 est sensiblement égal à θ6.

Selon ce mode de réalisation, quel que soit le débattement angulaire entre le premier élément et le deuxième élément, le premier jeu angulaire θ1 et le deuxième jeu angulaire θ2 sont nuls. Ici, quel que soit le débattement angulaire entre le premier élément et le deuxième élément, la première face d'extrémité 111 du premier ressort 11 est plaquée contre le premier plan d'appui P1 et la première face d'extrémité du deuxième ressort 12 est plaquée contre le deuxième plan d'appui P2.

On voit sur la figure 9, que la deuxième face d'extrémité 112 du premier ressort 11 est en contact contre la troisième surface de contact 55 par l'intermédiaire d'une portion radialement interne du premier ressort 11 lorsque le premier élément 1, le deuxième élément 2 et le troisième élément 3 sont dans la position relative de repos, et la deuxième face d'extrémité du premier ressort est maintenue en contact contre la quatrième surface de contact 56 par l'intermédiaire d'une portion radialement interne lorsque le premier élément 1, le deuxième élément 2 et le troisième élément 3 sont dans la position relative de repos. Les troisième et quatrième jeux angulaires peuvent être mesurés au niveau de ces contacts.

Comme on le voit sur la vue en coupe de la figure 9, l'insert 33 est agencé sur le même plan perpendiculaire à l'axe de rotation X que le voile.

Le premier siège d'appui 21 et le deuxième siège d'appui 22 disposent d'une coiffe 51 recouvrant radialement respectivement la première extrémité du premier ressort 11 et la première extrémité du deuxième ressort 12, les coiffes du premier siège 21 et du deuxième siège 22 comportant chacune des nervures de guidage axial aptes à coopérer avec le voile 1 et les rondelles latérales 25 et 26.

En se reportant à la figure 9, on voit que le premier siège 21 comporte une face frontale 53 contre laquelle s'appuie une première face d'extrémité 111 du premier ressort 11. Dans un plan perpendiculaire à l'axe de rotation X et à l'état de couple neutre, on voit que la première face d'extrémité 111 du premier ressort 11 est plaquée contre la face frontale 53 du premier siège 21 qui est lui-même plaqué contre les première 531 et cinquième 532 surface de contact. Le premier jeu angulaire θ1 et le cinquième jeu angulaire θ5 sont donc nuls.

On voit aussi que le deuxième siège 22 comporte une face frontale 54 contre laquelle s'appuie une première face d'extrémité 121 du deuxième ressort 12. Dans un plan perpendiculaire à l'axe de rotation X et à l'état de couple neutre, on voit que la première la première face d'extrémité 121 du deuxème ressort 12 est plaquée contre la face frontale 54 du deuxième siège 22 qui est lui-même plaqué contre les deuxième 541 et sixième 542 surfaces de contact. Le deuxième jeu angulaire θ2 et le sixième jeu angulaire θ6 sont donc nuls.

Les faces frontales 53 et 54 sont des surfaces annulaires, la première face d'extrémité 111 du premier ressort 11 et la première face d'extrémité 121 du deuxième ressort 12 étant formées respectivement par une première spire d'extrémité du premier ressort 11 et une première spire d'extrémité du deuxième ressort 12 qui reposent chacune respectivement sur la face frontale 53 et la face frontale 54. Ainsi, la spire d'extrémité des ressorts repose entièrement contre le siège associé, ce qui limite l'usure des ressorts. Ces surfaces annulaires d'appui se développent dans un plan parallèle à l'axe de rotation X.

Les deux tranches circonférentiellement opposées de l'insert 33 forment la troisième surface de contact 55 et la quatrième surface de contact 56. L'épaisseur E de ce corps est inférieure à la largeur axiale L occupée par les premier et deuxième ressorts.

Comme on peut le voir sur la figure 9, le premier siège 21 est agencé pour s'appuyer contre le troisième ressort 13 et le deuxième siège 22 est agencé pour s'appuyer contre le quatrième ressort 14.

Ici, le premier ressort et/ou le deuxième ressort sont montés avec une précharge telle que leur longueur est réduite de moins de moins de 1 mm, par rapport à leur longueur à l'état libre.

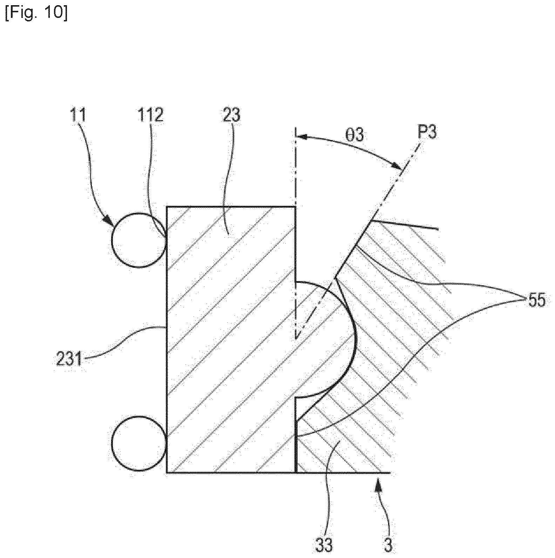

La figure 10 présente de façon schématique une vue de détail d'un deuxième mode de réalisation dans lequel la deuxième face d'extrémité 112 du premier ressort 11 est en appui contre une face frontale 231 d'un troisième siège d'appui 23 et la deuxième d'extrémité 122 du deuxième ressort 12 est en appui contre une face frontale d'un quatrième siège d'appui, le troisième siège d'appui et le quatrième siège d'appui étant chacun montés pivotant sur le troisième élément 3 avec un angle de pivotement entre le position de repos et la position relative de fin de débattement, le troisième jeu angulaire et le quatrième jeu angulaire étant réalisés respectivement par l'angle de pivotement du troisième siège et l'angle de pivotement du quatrième siège.

Ici seul le troisième siège 23 est représenté. La deuxième face d'extrémité 112 du ressort 11 est plaquée contre la face frontale 231 du troisième siège d'appui 23. De ce fait, le troisième jeu angulaire θ3 correspond ici à l'angle de pivotement du troisième siège 23 par rapport à l'élément de transfert de couple 33 de l'organe de phasage 3. Le pivotement du siège se fait au moyen d'un bossage convexe formé sur le siège et coopérant avec une cavité formée dans l'élément de transfert de couple 33. L'angle de pivotement peut être facilement ajusté en modifiant l'inclinaison des parois.

## Revendications

1. Dispositif de transmission de couple comprenant :
- un premier élément (1) qui peut tourner autour d'un axe de rotation (X);
- un deuxième élément (2) qui peut tourner autour de l'axe de rotation (X);
- un troisième élément (3) qui peut tourner autour de l'axe de rotation (X);
- un premier ressort (11) qui est agencé entre le premier élément (1) et le troisième élément (3) de façon à être comprimé élastiquement lors d'une rotation relative entre le premier élément (1) et le troisième élément (3),
- un deuxième ressort (12) qui est agencé entre le deuxième élément (2) et le troisième élément (3) de façon à être comprimé élastiquement lors d'une rotation relative entre le deuxième élément (2) et le troisième élément (3), le premier ressort (11) et le deuxième ressort (12) étant agencés en série entre le premier élément (1) et le deuxième élément (2) par l'intermédiaire de l'élément de transfert de couple (33) du troisième élément (3),
- un premier siège d'appui (21) disposé à une première extrémité du premier ressort (11), d'une part entre le premier élément (1) et le premier ressort (11) pour transférer le couple entre le premier élément (1) et le premier ressort (11) dans un premier sens (S1) de rotation relative des premier élément (1) et deuxième élément (2), d'autre part entre le deuxième élément (2) et le premier ressort (11) pour transférer le couple entre le deuxième élément (2) et le premier ressort (11) dans un second sens (S2) de rotation relative des premier élément (1) et deuxième élément (2),
- un deuxième siège d'appui (22) disposé à une première extrémité du deuxième ressort (12), d'une part entre le deuxième élément (2) et le deuxième ressort (12) pour transférer le couple entre le deuxième élément (2) et le deuxième ressort (12) dans le premier sens (S1) de rotation relative des premier élément (1) et deuxième élément (2), d'autre part entre le premier élément (1) et le deuxième ressort (12) pour transférer le couple entre le premier élément (1) et le deuxième ressort (12) dans le second sens (S2) de rotation relative des premier élément (1) et deuxième élément (2) ;
le dispositif de transmission de couple étant **caractérisé en ce que** le troisième élément comprend un élément de transfert de couple (33) transférant directement le couple entre le premier ressort (11) et le deuxième ressort (12).

2. Dispositif de transmission de couple selon la revendication 1 dans lequel le premier ressort (11) et le deuxième ressort (12) sont des ressorts hélicoïdaux en acier et l'élément de transfert de couple (33) est métallique, par exemple en acier.

3. Dispositif de transmission de couple selon l'une des revendications 1 à 2 dans lequel le dispositif de transmission de couple comprend une pluralité de premiers ressorts (11) et une pluralité de deuxièmes ressorts (12) organisés en paires de ressorts, le troisième élément (3) étant un organe de phasage (3) comprenant une pluralité d'éléments de transfert de couple (33), chaque élément de transfert de couple (33) étant intercalé entre le premier ressort (11) et le deuxième ressort (12) d'une paire de ressort, le premier ressort (11) et le deuxième ressort (12) de chaque paire de ressorts étant agencés en série par l'intermédiaire d'un élément de transfert de couple (33), et l'organe de phasage (3) comportant au moins une rondelle de phasage (31, 32) dotée d'une portion annulaire (36) s'étendant autour de l'axe de rotation X, le dispositif de transmission de couple comprenant en outre une pluralité de premiers sièges d'appui (21) disposés chacun à une première extrémité d'un premier ressort (11) et une pluralité de deuxièmes sièges d'appui (21) disposés chacun à une première extrémité d'un deuxième ressort (12).

4. Dispositif de transmission de couple selon la revendication 3 dans lequel chaque rondelle de phasage (31, 32) est formée dans une tôle d'acier.

5. Dispositif de transmission de couple selon l'une des revendications 3 à 4 dans lequel chaque portion annulaire (36) s'étend autour de l'axe de rotation radialement à l'intérieur des premier (11) et deuxième (12) ressorts.

6. Dispositif de transmission de couple selon l'une des revendications 3 à 5 dans lequel chaque rondelle de phasage (31, 32) comporte une patte (37) s'étendant radialement depuis la portion annulaire (36) et agencée circonférentiellement entre le premier ressort (11) et le deuxième ressort (12) et chaque élément de transfert de couple (33) est formé par un insert (33) monté sur au moins l'une des pattes (37) de rondelle de phasage (31, 32), chaque insert (33) étant réalisé en acier, de préférence acier fritté ou moulé, chaque insert (33) étant serré axialement entre une patte (37) d'une rondelle de phasage (31) et une patte d'une autre rondelle de phasage (32), l'insert (33) étant assemblé avec les deux pattes (37) de rondelle de phasage (31,32) entre lesquelles il est intercalé au moyen d'un élément de fixation (34) tel qu'un rivet.

7. Dispositif de transmission de couple selon l'une des revendications 3 à 6 dans lequel ladite au moins une rondelle de phasage (31, 32) comporte une patte (37) s'étendant radialement depuis la portion annulaire (36) et agencée circonférentiellement entre le premier ressort (11) et le deuxième ressort (12), l'élément de transfert de couple (33) étant formé par ladite patte (37).

8. Dispositif de transmission de couple selon l'une des revendications précédentes dans lequel le premier élément (1) comporte un voile (1) s'étendant autour de l'axe de rotation (X) et le deuxième élément (2) comporte deux rondelles latérales (25, 26) agencées de part et d'autre du voile (1), le troisième élément (3) comportant deux rondelles de phasage (31, 32) décalées axialement l'une de l'autre, les deux rondelles de phasage (31, 32) étant agencées axialement à l'intérieur des deux rondelles latérales (25, 26) du deuxième élément (2), et les deux rondelles de phasage (31, 32) étant agencées axialement de part et d'autre du voile (1).

9. Dispositif de transmission de couple selon l'une des revendications précédentes dans lequel l'élément de transfert de couple (33) comprend un premier centreur (41) disposé dans la deuxième extrémité du premier ressort (11) et un deuxième centreur (42) disposé dans la deuxième extrémité du deuxième ressort (12), un jeu axial étant présent entre le premier centreur (41) et le premier ressort (11) et un jeu axial étant présent entre le deuxième centreur (42) et le deuxième ressort (12), chaque jeu axial étant inférieur à 1mm, en particulier inférieur à 0.5 mm.

10. Dispositif de transmission de couple selon l'une des revendications précédentes dans lequel les premier et deuxième sièges (21, 22) sont fabriqués avec du plastique, par exemple du polyamide ou du PAEK, par exemple du polyamide 6-6 ou du PEEK.

11. Dispositif de transmission de couple selon l'une des revendications précédentes dans lequel le premier siège (21) et le deuxième siège (22) disposent d'une coiffe (51) recouvrant radialement respectivement la première extrémité du premier ressort (11) et la première extrémité du deuxième ressort (12), et les coiffes (51) du premier siège (21) et du deuxième siège (22) comportent chacune des nervures (59) de guidage axial aptes à coopérer avec le premier élément (1) et le deuxième élément (2).

12. Dispositif de transmission de couple selon l'une des revendications précédentes dans lequel le dispositif de transmission de couple comprend un troisième ressort (13) qui est logé à l'intérieur du premier ressort (11) et/ou un premier absorbeur de choc (61) disposé à l'intérieur du premier ressort (11) et apte à s'opposer élastiquement à la rotation relative entre le premier élément (1) et le troisième élément (3) au-delà d'un premier débattement angulaire prédéterminé entre le premier élément (1) et le troisième élément (3) dans un premier sens de rotation relative; et le dispositif de transmission de couple comprend en outre un quatrième ressort (14) qui est logé à l'intérieur du deuxième ressort (12) et/ou un deuxième absorbeur de choc (62) disposé à l'intérieur du deuxième ressort (12) et apte à s'opposer élastiquement à la rotation relative entre le deuxième élément (2) et le troisième élément (3) au-delà d'un deuxième débattement angulaire prédéterminé entre le deuxième élément (2) et le troisième élément(3) dans le premier sens de rotation relative.

13. Dispositif de transmission de couple selon l'une des revendications précédentes dans lequel le premier ressort et/ou le deuxième ressort sont montés avec une précharge telle que leur longueur est réduite de moins de 2 mm, de préférence moins de 1 mm par rapport à leur longueur à l'état libre.

14. Dispositif de transmission de couple selon l'une des revendications précédentes dans lequel l'un parmi le premier élément (1) et le deuxième élément (2) porte un disque de friction (18) et l'autre parmi le premier élément (1) et le deuxième élément (2) comporte un moyeu (29) apte à entrainer un arbre d'entrée de boite de vitesse.

15. Système de transmission de couple comprenant un dispositif de transmission de couple selon la revendication 14, et un limiteur de couple configuré pour pincer le disque de friction (18) du dispositif de transmission de couple.

## Patentansprüche

1. Drehmomentübertragungsvorrichtung, umfassend:
- ein erstes Element (1), das sich um eine Drehachse (X) drehen kann;
- ein zweites Element (2), das sich um die Drehachse (X) drehen kann;
- ein drittes Element (3), das sich um die Drehachse (X) drehen kann;
- eine erste Feder (11), die so zwischen dem ersten Element (1) und dem dritten Element (3) angeordnet ist, dass sie bei einer relativen Drehung zwischen dem ersten Element (1) und dem dritten Element (3) elastisch komprimiert wird,
- eine zweite Feder (12), die so zwischen dem zweiten Element (2) und dem dritten Element (3) angeordnet ist, dass sie bei einer relativen Drehung zwischen dem zweiten Element (2) und dem dritten Element (3) elastisch komprimiert wird, wobei die erste Feder (11) und die zweite Feder (12) in Reihe zwischen dem ersten Element (1) und dem zweiten Element (2) über das Drehmomentübertragungselement (33) des dritten Elements (3) angeordnet sind,
- einen ersten Stützsitz (21), der an einem ersten Ende der ersten Feder (11) angeordnet ist, und zwar einerseits zwischen dem ersten Element (1) und der ersten Feder (11), um das Drehmoment zwischen dem ersten Element (1) und der ersten Feder (11) in einer ersten Richtung (S1) einer relativen Drehung des ersten Elements (1) und des zweiten Elements (2) zu übertragen, und andererseits zwischen dem zweiten Element (2) und der ersten Feder (11), um das Drehmoment zwischen dem zweiten Element (2) und der ersten Feder (11) in einer zweiten Richtung (S2) einer relativen Drehung des ersten Elements (1) und des zweiten Elements (2) zu übertragen,
- einen zweiten Stützsitz (22), der an einem ersten Ende der zweiten Feder (12) angeordnet ist, und zwar einerseits zwischen dem zweiten Element (2) und der zweiten Feder (12), um das Drehmoment zwischen dem zweiten Element (2) und der zweiten Feder (12) in der ersten Richtung (S1) der relativen Drehung des ersten Elements (1) und des zweiten Elements (2) zu übertragen, und andererseits zwischen dem ersten Element (1) und der zweiten Feder (12), um das Drehmoment zwischen dem ersten Element (1) und der zweiten Feder (12) in der zweiten Richtung (S2) der relativen Drehung des ersten Elements (1) und des zweiten Elements (2) zu übertragen; wobei die Drehmomentübertragungsvorrichtung **dadurch gekennzeichnet ist, dass** das dritte Element ein Drehmomentübertragungselement (33) umfasst, das das Drehmoment direkt zwischen der ersten Feder (11) und der zweiten Feder (12) überträgt.

2. Drehmomentübertragungsvorrichtung nach Anspruch 1, wobei die erste Feder (11) und die zweite Feder (12) Stahlschraubenfedern sind und das Drehmomentübertragungselement (33) aus Metall, beispielsweise aus Stahl, ist.

3. Drehmomentübertragungsvorrichtung nach einem der Ansprüche 1 bis 2, wobei die Drehmomentübertragungsvorrichtung mehrere erste Federn (11) und mehrere zweite Federn (12) umfasst, die in Federpaaren angeordnet sind, wobei das dritte Element (3) ein Phasenorgan (3) ist, das mehrere Drehmomentübertragungselemente (33) umfasst, wobei jedes Drehmomentübertragungselement (33) zwischen der ersten Feder (11) und der zweiten Feder (12) eines Federpaars angeordnet ist, wobei die erste Feder (11) und die zweite Feder (12) jedes Federpaars in Reihe über ein Drehmomentübertragungselement (33) angeordnet sind, und wobei das Phasenorgan (3) mindestens eine Phasenscheibe (31, 32) aufweist, die mit einem ringförmigen Abschnitt (36) versehen ist, der sich um die Drehachse X erstreckt, wobei die Drehmomentübertragungsvorrichtung ferner mehrere jeweils an einem ersten Ende einer ersten Feder (11) angeordnete erste Stützsitze (21) und mehrere jeweils an einem ersten Ende einer zweiten Feder (12) angeordnete zweite Stützsitze (21) umfasst.

4. Drehmomentübertragungsvorrichtung nach Anspruch 3, wobei jede Phasenscheibe (31, 32) aus einem Stahlblech gebildet ist.

5. Drehmomentübertragungsvorrichtung nach einem der Ansprüche 3 bis 4, wobei sich jeder ringförmige Abschnitt (36) um die Drehachse radial innerhalb der ersten (11) und der zweiten Feder (12) erstreckt.

6. Drehmomentübertragungsvorrichtung nach einem der Ansprüche 3 bis 5, wobei jede Phasenscheibe (31, 32) eine Lasche (37) umfasst, die sich radial vom ringförmigen Abschnitt (36) erstreckt und in Umfangsrichtung zwischen der ersten Feder (11) und der zweiten Feder (12) angeordnet ist, und wobei jedes Drehmomentübertragungselement (33) durch einen Einsatz (33) gebildet ist, der an zumindest einer der Laschen (37) einer Phasenscheibe (31, 32) montiert ist, wobei jeder Einsatz (33) aus Stahl, vorzugsweise aus Sinterstahl oder Gussstahl, ausgeführt ist, wobei jeder Einsatz (33) axial zwischen einer Lasche (37) einer Phasenscheibe (31) und einer Lasche einer anderen Phasenscheibe (32) eingeklemmt ist, wobei der Einsatz (33) mit den beiden Laschen (37) einer Phasenscheibe (31, 32), zwischen denen er eingespannt ist, mit Hilfe eines Befestigungselements (34), beispielsweise eines Niets, zusammengefügt ist.

7. Drehmomentübertragungsvorrichtung nach einem der Ansprüche 3 bis 6, wobei die mindestens eine Phasenscheibe (31, 32) eine Lasche (37) aufweist, die sich radial vom ringförmigen Abschnitt (36) erstreckt und in Umfangsrichtung zwischen der ersten Feder (11) und der zweiten Feder (12) angeordnet ist, wobei das Drehmomentübertragungselement (33) durch die Lasche (37) gebildet ist.

8. Drehmomentübertragungsvorrichtung nach einem der vorangehenden Ansprüche, wobei das erste Element (1) eine Scheibe (1) aufweist, die sich um die Drehachse (X) erstreckt, und wobei das zweite Element (2) zwei Seitenscheiben (25, 26) umfasst, die auf beiden Seiten der Scheibe (1) angeordnet sind, wobei das dritte Element (3) zwei axial gegeneinander versetzte Phasenscheiben (31, 32) aufweist, wobei die beiden Phasenscheiben (31, 32) axial innerhalb der beiden Seitenscheiben (25, 26) des zweiten Elements (2) angeordnet sind und wobei die beiden Phasenscheiben (31, 32) axial auf beiden Seiten der Scheibe (1) angeordnet sind.

9. Drehmomentübertragungsvorrichtung nach einem der vorangehenden Ansprüche, wobei das Drehmomentübertragungselement (33) ein im zweiten Ende der ersten Feder (11) angeordnetes erstes Zentrierelement (41) und ein im zweiten Ende der zweiten Feder (12) angeordnetes zweites Zentrierelement (42) umfasst, wobei zwischen dem ersten Zentrierelement (41) und der ersten Feder (11) ein axiales Spiel vorhanden ist und zwischen dem zweiten Zentrierelement (42) und der zweiten Feder (12) ein axiales Spiel vorhanden ist, wobei jedes axiale Spiel kleiner als 1 mm, insbesondere kleiner als 0,5 mm, ist.

10. Drehmomentübertragungsvorrichtung nach einem der vorangehenden Ansprüche, wobei der erste und der zweite Sitz (21, 22) aus Kunststoff, beispielsweise Polyamid oder PAEK, beispielsweise Polyamid 6-6 oder PEEK, gefertigt sind.

11. Drehmomentübertragungsvorrichtung nach einem der vorangehenden Ansprüche, wobei der erste Sitz (21) und der zweite Sitz (22) über eine Kappe (51) verfügen, die das erste Ende der ersten Feder (11) und das erste Ende der zweiten Feder (12) radial bedeckt, und wobei die Kappen (51) des ersten Sitzes (21) und des zweiten Sitzes (22) jeweils axiale Führungsrippen (59) aufweisen, die dazu geeignet sind, mit dem ersten Element (1) und dem zweiten Element (2) zusammenzuwirken.

12. Drehmomentübertragungsvorrichtung nach einem der vorangehenden Ansprüche, wobei die Drehmomentübertragungsvorrichtung eine dritte Feder (13) umfasst, die innerhalb der ersten Feder (11) angeordnet ist, und/oder einen ersten Stoßdämpfer (61), der innerhalb der ersten Feder (11) angeordnet und dazu geeignet ist, der relativen Drehung zwischen dem ersten Element (1) und dem dritten Element (3) über einen ersten vorbestimmten Winkelausschlag zwischen dem ersten Element (1) und dem dritten Element (3) in einer ersten Richtung einer relativen Drehung hinaus elastisch entgegenzuwirken; und wobei die Drehmomentübertragungsvorrichtung ferner eine vierte Feder (14) umfasst, die innerhalb der zweiten Feder (12) angeordnet ist, und/oder einen zweiten Stoßdämpfer (62), der innerhalb der zweiten Feder (12) angeordnet und dazu geeignet ist, der relativen Drehung zwischen dem zweiten Element (2) und dem dritten Element (3) über einen zweiten vorbestimmten Winkelausschlag zwischen dem zweiten Element (2) und dem dritten Element (3) in der ersten Richtung einer relativen Drehung hinaus elastisch entgegenzuwirken.

13. Drehmomentübertragungsvorrichtung nach einem der vorangehenden Ansprüche, wobei die erste Feder und/oder die zweite Feder mit einer solchen Vorspannung montiert sind, dass ihre Länge im Vergleich zu ihrer Länge im freien Zustand um weniger als 2 mm, vorzugsweise um weniger als 1 mm, reduziert ist.

14. Drehmomentübertragungsvorrichtung nach einem der vorangehenden Ansprüche, wobei eines des ersten Elements (1) und des zweiten Elements (2) eine Reibscheibe (18) trägt und das andere des ersten Elements (1) und des zweiten Elements (2) eine Nabe (29) trägt, die dazu geeignet ist, eine Getriebeeingangswelle anzutreiben.

15. Drehmomentübertragungssystem, umfassend eine Drehmomentübertragungsvorrichtung nach Anspruch 14 und einen Drehmomentbegrenzer, der dazu ausgelegt ist, die Reibscheibe (18) der Drehmomentübertragungsvorrichtung einzuklemmen.

## Claims

1. A torque transmission device comprising:
- a first element (1) which is able to rotate about an axis of rotation (X);
- a second element (2) which is able to rotate about the axis of rotation (X);
- a third element (3) which is able to rotate about the axis of rotation (X);
- a first spring (11) which is arranged between the first element (1) and the third element (3) so as to be compressed elastically upon relative rotation between the first element (1) and the third element (3),
- a second spring (12) which is arranged between the second element (2) and the third element (3) so as to be compressed elastically upon relative rotation between the second element (2) and the third element (3), the first spring (11) and the second spring (12) being arranged in series between the first element (1) and the second element (2) by way of the torque transfer element (33) of the third element (3),
- a first supporting seat (21) positioned at a first end of the first spring (11), on the one hand between the first element (1) and the first spring (11) so as to transfer torque between the first element (1) and the first spring (11) in a first direction (S1) of relative rotation of the first element (1) and second element (2), and, on the other hand, between the second element (2) and the first spring (11) so as to transfer torque between the second element (2) and the first spring (11) in a second direction (S2) of relative rotation of the first element (1) and second element (2),
- a second supporting seat (22) positioned at a first end of the second spring (12), on the one hand between the second element (2) and the second spring (12) so as to transfer torque between the second element (2) and the second spring (12) in the first direction (S1) of relative rotation of the first element (1) and second element (2), and, on the other hand, between the first element (1) and the second spring (12) so as to transfer torque between the first element (1) and the second spring (12) in the second direction (S2) of relative rotation of the first element (1) and second element (2);
the torque transmission device being **characterized in that** the third element comprises a torque transfer element (33) directly transferring torque between the first spring (11) and the second spring (12).

2. The torque transmission device as claimed in claim 1, wherein the first spring (11) and the second spring (12) are helical springs made of steel and the torque transfer element (33) is made of metal, for example of steel.

3. The torque transmission device as claimed in one of claims 1 to 2, wherein the torque transmission device comprises a plurality of first springs (11) and a plurality of second springs (12) organized in spring pairs, the third element (3) being a phasing member (3) comprising a plurality of torque transfer elements (33), each torque transfer element (33) being interposed between the first spring (11) and the second spring (12) of a spring pair, the first spring (11) and the second spring (12) of each spring pair being arranged in series by way of a torque transfer element (33), and the phasing member (3) comprising at least one phase washer (31, 32) provided with an annular portion (36) extending about the axis of rotation X, the torque transmission device further comprising a plurality of first supporting seats (21) each positioned at a first end of a first spring (11) and a plurality of second supporting seats (21) each positioned at a first end of a second spring (12).

4. The torque transmission device as claimed in claim 3, wherein each phase washer (31, 32) is formed from steel sheet.

5. The torque transmission device as claimed in one of claims 3 and 4, wherein each annular portion (36) extends about the axis of rotation radially on the inside of the first (11) and second (12) springs.

6. The torque transmission device as claimed in one of claims 3 to 5, wherein each phase washer (31, 32) comprises a tab (37) extending radially from the annular portion (36) and arranged circumferentially between the first spring (11) and the second spring (12) and each torque transfer element (33) is formed by an insert (33) mounted on at least one of the tabs (37) of a phase washer (31, 32), each insert (33) being made of steel, preferably sintered or cast steel, each insert (33) being clamped axially between a tab (37) of one phase washer (31) and a tab of another phase washer (32), the insert (33) being assembled with the two tabs (37) of phase washer (31, 32) between which it is fitted by means of a fastener (34) such as a rivet.

7. The torque transmission device as claimed in one of claims 3 to 6, wherein said at least one phase washer (31, 32) comprises a tab (37) extending radially from the annular portion (36) and arranged circumferentially between the first spring (11) and the second spring (12), the torque transfer element (33) being formed by said tab (37).

8. The torque transmission device as claimed in one of the preceding claims, wherein the first element (1) comprises a plate (1) extending around the axis of rotation (X) and the second element (2) comprises two lateral washers (25, 26) arranged one on each side of the plate (1), the third element (3) comprising two phase washers (31, 32) axially offset from one another, the two phase washers (31, 32) being arranged axially on the inside of the two lateral washers (25, 26) of the second element (2), and the two phase washers (31, 32) being arranged axially one on each side of the plate (1).

9. The torque transmission device as claimed in one of the preceding claims, wherein the torque transfer element (33) comprises a first centering device (41) positioned in the second end of the first spring (11) and a second centering device (42) positioned in the second end of the second spring (12), there being an axial clearance between the first centering device (41) and the first spring (11), and there being an axial clearance between the second centering device (42) and the second spring (12), each axial clearance being less than 1 mm, in particular less than 0.5 mm.

10. The torque transmission device as claimed in one of the preceding claims, wherein the first and second seats (21, 22) are produced in plastic, for example in polyamide or PAEK, for example in polyamide 6-6 or PEEK.

11. The torque transmission device as claimed in one of the preceding claims, wherein the first seat (21) and the second seat (22) have a cap (51) respectively radially covering the first end of the first spring (11) and the first end of the second spring (12), and the caps (51) of the first seat (21) and of the second seat (22) each have axial-guidance ribs (59) able to collaborate with the first element (1) and with the second element (2).

12. The torque transmission device as claimed in one of the preceding claims, wherein the torque transmission device comprises a third spring (13) which is housed inside the first spring (11) and/or a first shock absorber (61) positioned inside the first spring (11) and able elastically to oppose the relative rotation between the first element (1) and the third element (3) beyond a predetermined first angular travel between the first element (1) and the third element (3) in a first direction of relative rotation; and the torque transmission device further comprises a fourth spring (14) which is housed inside the second spring (12) and/or a second shock absorber (62) positioned inside the second spring (12) and able elastically to oppose the relative rotation between the second element (2) and the third element (3) beyond a predetermined second angular travel between the second element (2) and the third element (3) in the first direction of relative rotation.

13. The torque transmission device as claimed in one of the preceding claims, wherein the first spring and/or the second spring are mounted with a preload such that their length is reduced by less than 2 mm, preferably less than 1 mm, with respect to their free length.

14. The torque transmission device as claimed in one of the preceding claims, wherein of the first element (1) and the second element (2) one bears a friction disk (18) and, of the first element (1) and the second element (2), the other comprises a hub (29) able to drive a gearbox input shaft.

15. A torque transmission system comprising a torque transmission device as claimed in claim 14 and a torque limiter configured to squeeze the friction disk (18) of the torque transmission device.
